# DEMANDE DE BREVET EUROPEEN

(11) **EP 2 863 321 A1**
(43) Date de publication de la demande: **22.04.2015**
(21) Numéro de dépôt: 13188916.4
(22) Date de dépôt: 16.10.2013
(51) Int. Cl.: G06F 17/24, G06F 17/22

(54) **Procédé et système de génération automatique de documents à partir d'un index**

(71) Demandeur: Valipat S.A., 1060 Bruxelles (BE)
(72) Inventeur: Gerardin, Olivier, 1180 Uccle (BE)
(74) Mandataire: Argyma

(57) **Abrégé**

Un procédé de génération automatique d'au moins un document (DOC), notamment de type procuration destinée à autoriser un mandataire à réaliser une action pour le compte d'un mandant, le procédé comprenant :
- une étape de sélection (E1) de valeurs du premier paramètre (P1) et du deuxième paramètre (P2) de manière à former un contexte de génération (k) ;
- une étape de consultation (E2) de l'index statique (INDEX) afin d'obtenir le document virtuel (DOCv) associé audit contexte de génération (k) ;
- une étape de requête (E3) dans la base de données (3) de la mise en page (MP) et des paragraphes (PA) pointés par le document virtuel obtenu (DOCv) ; et
- une étape de génération (E4) dudit document (DOC) dans un format électronique, contenant les paragraphes (PA) renvoyés par ladite requête et la mise en page (MP) renvoyée par ladite requête.

## Description

### DOMAINE TECHNIQUE GENERAL ET ART ANTERIEUR

La présente invention concerne le domaine de la génération automatique de documents. L'invention trouve notamment une application à la génération automatique de documents tels que des procurations ou des pouvoirs qui sont destinés à autoriser un mandataire à réaliser une action pour le compte d'un mandant.

Dans de nombreuses situations, une personne, physique ou morale, ne peut exécuter une certaine action elle-même, pour des raisons pratiques (éloignement, manque de temps) et/ou juridique (non habilitation à exécuter soi-même cette action). Cette personne doit donc faire exécuter cette action par une autre personne, physique ou morale, pour son compte.

A titre d'exemple, on peut citer le pouvoir qui permet à un avocat ou une société d'avocats de représenter une personne devant une juridiction nationale ou régionale pour y accomplir des actes juridiques et/ou administratifs.

La gestion de tels pouvoirs peut être administrativement lourde et compliquée. C'est le cas notamment dans la situation courante dans laquelle la personne qui souhaite réaliser une action devant plusieurs juridictions, contacte son avocat habituel qui n'est lui-même pas habilité à exécuter ladite action dans toutes les juridictions concernées.

Dans un tel cas, l'avocat s'appuie sur un réseau d'avocats habilités à représenter son client devant les différentes juridictions concernées, et doit se charger de faire signer à son client un pouvoir différent pour chaque juridiction auprès de laquelle l'action doit être exécutée. Ce problème se pose notamment pour effectuer des actes (dépôt, retrait, etc.) relatifs à des demandes de brevet, de marque ou de dessin et modèle.

Dans un tel cas, l'avocat doit contacter une par une les personnes habilitées, recevoir un par un les formulaires de pouvoir qu'il doit transmettre pour signature à son client (qui donne le pouvoir), puis les renvoyer aux différents avocats de son réseau pour exécution de l'action auprès des différentes juridictions.

Pour simplifier cette gestion, on connaît des systèmes et procédés qui sont basés sur la collecte de pouvoirs qui sont scannés et stockés dans une base de données.

La gestion d'une telle base de données de pouvoirs est complexe du fait qu'elle doit contenir un document pour chaque situation susceptible de se produire.

Ainsi, la base de données doit comprendre aussi bien un pouvoir général relatif au dépôt d'une demande de brevet en Europe en langue française qu'un pouvoir spécifique relatif au retrait d'une marque en ltalie en langue italienne.

De tels systèmes et procédés posent à la fois des problèmes de maintenance, d'efficacité de stockage et de récupération de l'information, et d'utilisation. En particulier, avec de tels systèmes ou procédés, une modification d'un document nécessite de numériser de nouveau ledit document, ce qui présente un inconvénient.

De plus, lorsqu'une modification s'applique à un groupe de documents, par exemple lors d'un changement de législation dans une juridiction particulière, il est nécessaire d'appliquer des changements à chaque document concerné, ce qui est fastidieux et/ou source d'erreur.

De manière classique, le document à générer comporte un nombre déterminé de paragraphes dont le contenu est déterminé. On connaît dans l'art antérieur des procédés automatiques de génération de documents à partir d'une base de données de paragraphes. Selon ces procédés, on peut sélectionner différents paragraphes et les associer ensemble pour former le document à générer. A titre d'exemple, on connaît un tel procédé de génération pour l'aide à la rédaction de contrats dans lequel un utilisateur accède à une interface informatique depuis un navigateur internet et sélectionne les clauses qu'il souhaite ajouter au contrat à générer. Lors de la génération du contrat, les paragraphes relatifs aux clauses sélectionnées sont intégrés automatiquement dans un document du type PDF.

Un tel procédé de génération de document est adapté pour générer automatiquement un unique pouvoir pour une juridiction considéré. Néanmoins, si l'utilisateur souhaite obtenir un pouvoir pour une autre juridiction, l'utilisateur doit de nouveau sélectionner les paragraphes adéquats, ce qui constitue une perte de temps.

Aussi, il existe un besoin pour générer automatiquement une pluralité de documents à partir d'une unique étape de saisie par un utilisateur tout en permettant une gestion optimale de la base de données.

On connaît dans l'art antérieur différents procédés de génération de documents dans lesquels les paragraphes sont mutualisés afin de limiter la taille de la base de données de paragraphes ainsi que sa maintenance.

En pratique, les procédés de génération de l'art antérieur nécessitent une puissance de calcul importante. En outre, lorsque plusieurs documents sont générés de manière simultanée, le temps de génération est important, ce qui présente un inconvénient pour les utilisateurs.

L'objet de l'invention est donc d'apporter une solution aux problèmes et inconvénients précités, parmi d'autres.

### PRESENTATION GENERALE DE L'INVENTION

Pour éliminer au moins certains de ces inconvénients, l'invention concerne un procédé de génération automatique d'au moins un document, notamment de type procuration destinée à autoriser un mandataire à réaliser une action pour le compte d'un mandant, le document contenant une pluralité de paragraphes affichée selon une mise en page, ladite pluralité de paragraphes et ladite mise en page étant fonction d'au moins un premier paramètre et un deuxième paramètre, le procédé mettant en oeuvre une base de données comportant au moins :
- une base de mises en page ;
- une base de paragraphes ;
- une liste de valeurs dudit premier paramètre ;
- une liste de valeurs dudit deuxième paramètre, chaque combinaison de valeurs desdits paramètres formant un contexte de génération ;
- un index statique associant chaque contexte de génération à un document virtuel, un document virtuel comportant au moins un pointeur visant une mise en page déterminée de la base de mises en page et une pluralité de pointeurs visant des paragraphes déterminés de la base de paragraphes ;
le procédé comprenant :
- une étape de sélection de valeurs du premier paramètre et du deuxième paramètre de manière à former un contexte de génération ;
- une étape de consultation de l'index statique à partir dudit contexte de génération afin d'obtenir le document virtuel associé audit contexte de génération ;
- une étape de requête dans la base de données de la mise en page et des paragraphes pointés par le document virtuel obtenu ; et
- une étape de génération dudit document dans un format électronique, contenant les paragraphes renvoyés par ladite requête et la mise en page renvoyée par ladite requête.

De manière avantageuse, grâce à l'invention, le contenu et les valeurs en tant que tels des éléments du document à générer (mises en page, paragraphes) sont dissociés de la logique d'association desdits éléments (document virtuel). Une telle dissociation permet d'offrir une grande flexibilité pour générer des documents.

En outre, l'étape de requête est rapide à mettre en oeuvre étant donné que chaque contexte de génération est associé à un document virtuel qui comporte la définition de l'ensemble des éléments du document (mise en page et paragraphes). Autrement dit, grâce aux documents virtuels et à l'index statique, on détermine de manière directe le contenu d'un document à générer à partir du contexte de génération. Un tel procédé de génération limite la durée d'attente d'un utilisateur qui obtient le document désiré de manière instantanée, le procédé de génération étant ainsi plus efficace puisqu'il nécessite moins de ressources informatiques que les procédés de l'art antérieur.

Un tel procédé est particulièrement avantageux pour générer un grand nombre de documents de manière simultanée, en particulier, des pouvoirs pour une pluralité de juridictions.

Selon un aspect de l'invention, un même paragraphe de la base de paragraphes est pointé par plusieurs documents virtuels différents. De manière similaire, une même mise en page est pointée par plusieurs documents virtuels différents. Autrement dit, un grand nombre de documents différents peuvent être générés avec un nombre limité de paragraphes et/ou de mises en page. La mutualisation des paragraphes et des mises en page facilite la maintenance. L'utilisation d'un index statique permet, en outre, d'analyser de manière précise le niveau de mutualisation des paragraphes et des mises en page, ce qui facilite la maintenance ainsi que la création de nouveaux documents à générer. A titre d'exemple, si un paragraphe n'est pointé que par quelques documents virtuels, il peut être intéressant de vérifier s'il ne peut pas être remplacé par un paragraphe similaire avec un taux de mutualisation plus élevé.

De manière avantageuse, lorsqu'un paragraphe de la base de données est modifié, la modification apportée est répercutée sur l'ensemble des documents générés à partir de documents virtuels pointant vers ledit paragraphe modifié. Autrement dit, on modifie une grande pluralité de documents à générer en ne modifiant qu'un paragraphe de la base de données, le document virtuel n'étant avantageusement pas modifié.

De préférence, le document comprend au moins un paragraphe comportant une trame fixe et au moins un champ variable, permettant ainsi une personnalisation dudit paragraphe et/ou une limitation du nombre de paragraphes de la base de paragraphes.

De préférence dans ce cas, la trame fixe dudit paragraphe est stockée dans la base de données avec les autres paragraphes.

De préférence encore, le procédé comprend une étape de saisie dans un formulaire de saisie, ou une étape de récupération dans une autre base de données, de la valeur du champ variable dudit paragraphe.

De préférence dans ce cas, le procédé comprend une étape de génération d'un formulaire de saisie en fonction du contexte de génération afin de saisir la valeur du champ variable. Ainsi, le formulaire de saisie et donc les champs variables sont corrélés au contexte de génération, ce qui facilite et accélère la saisie des champs variables.

De préférence, l'étape de sélection d'au moins un paramètre est faite de manière conditionnelle en fonction de la valeur d'au moins un autre paramètre. Ainsi, on favorise la formation de combinaisons de valeurs de paramètres compatibles, les combinaisons impossibles ne pouvant pas être sélectionnées, ce qui procure un gain de temps pour l'utilisateur.

De préférence, plusieurs valeurs d'un même paramètre sont sélectionnées au cours de l'étape de sélection de manière à former plusieurs contextes de génération et ainsi générer plusieurs documents. Un tel procédé permet ainsi de générer un grand nombre de documents de manière simultanée et, en particulier, des pouvoirs pour une pluralité de juridictions différentes. Une telle sélection multiple permet de diminuer le temps de sélection de l'utilisateur ; en effet, en une seule manipulation (c'est-à-dire une seule mise en oeuvre du procédé selon l'invention), l'utilisateur peut générer un lot de documents. Une génération simultanée d'une pluralité de documents est connue de l'homme du métier sous son terme anglais « batch ». Grâce à l'index, une telle génération d'une pluralité de documents différents « en batch » est mise en oeuvre de manière rapide.

Selon un aspect de l'invention, l'index statique comporte un même document virtuel associé à plusieurs contextes de génération différents de manière à limiter le nombre de documents virtuels. Alternativement ou cumulativement à la mutualisation de paragraphes et/ou de mises en page, les documents virtuels peuvent également être mutualisés, de telle sorte qu'un même document virtuel soit associé à une pluralité de contextes de génération. Un grand nombre de contextes de génération permet à un utilisateur de choisir précisément le document qu'il souhaite générer. La mutualisation des documents virtuels permet de proposer à l'utilisateur une sélection large de documents à générer tout en conservant un nombre limité de documents virtuels. Ainsi, un utilisateur peut former un contexte de génération très précis correspondant à ses attentes, alors que ledit contexte de génération est associé à un document virtuel lui-même associé à d'autres contextes de génération plus généraux. Les souhaits précis de l'utilisateur sont exaucés tout en conservant un procédé de génération rapide, fiable et dont la maintenance est aisée. De plus, par analyse de l'index statique, on peut déterminer le niveau de mutualisation de chaque document virtuel, ce qui facilite la maintenance dudit index statique.

Grâce à un tel index statique, plusieurs contextes de génération différents pointent vers un même document virtuel, ce qui limite le nombre et la variété de documents virtuels et, par voie de conséquence, le nombre et la variété de paragraphes et /ou mises en page. Autrement dit, un grand nombre de documents différents peuvent être générés avec un nombre limité de paragraphes et/ou de mises en page. La mutualisation des paragraphes et des mises en page facilite la maintenance, qui en est encore facilitée par la mutualisation des documents virtuels. Autrement dit, le procédé selon l'invention met en oeuvre une cascade de mutualisations (paragraphes, mises en page, documents virtuels).

L'invention concerne également un système de génération automatique d'au moins un document, notamment de type procuration destinée à autoriser un mandataire à réaliser une action pour le compte d'un mandant, le document contenant une pluralité de paragraphes affichée selon une mise en page, ladite pluralité de paragraphes et ladite mise en page étant fonction d'au moins un premier paramètre et un deuxième paramètre, le système de génération comportant :
- une base de données comportant au moins :
   ○ une base de mises en page ;
   ○ une base de paragraphes ;
   ○ une liste de valeurs dudit premier paramètre ;
   ○ une liste de valeurs dudit deuxième paramètre, chaque combinaison de valeurs desdits paramètres formant un contexte de génération ;
   ○ un index statique associant chaque contexte de génération à un document virtuel, un document virtuel comportant au moins un pointeur visant une mise en page déterminée de la base de mises en page et une pluralité de pointeurs visant des paragraphes déterminés de la base de paragraphes ; et
- un module de génération apte à :
   ○ consulter l'index statique afin d'obtenir le document virtuel associé à un contexte de génération préalablement déterminé ;
   ○ effectuer une requête dans la base de données de la mise en page et des paragraphes pointés par le document virtuel obtenu ;
   ○ générer un document dans un format électronique, contenant les paragraphes renvoyés par ladite requête et la mise en page renvoyée par ladite requête.

Le système de l'invention présente les mêmes avantages que le procédé de l'invention.

De manière préférée, au moins un paragraphe comportant une trame fixe et au moins un champ variable, le module de génération est apte à récupérer la valeur du champ variable dudit paragraphe dans un formulaire de saisie ou dans une autre base de données et à associer cette valeur avec la trame fixe dudit paragraphe.

De préférence, le système comprend des moyens aptes à générer un formulaire de saisie en fonction du contexte de génération.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un système de génération automatique de documents à partir d'une base de données d'un serveur de données ;
- la figure 2 est une représentation schématique d'un document généré ;
- la figure 3 est une représentation schématique générale des étapes du procédé de génération automatique de documents ; et
- la figure 4 est une représentation schématique desdites étapes mises en oeuvre en relation avec les éléments de la base de données du système de génération.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

L'invention se rapporte, selon un premier aspect, à un procédé de génération automatique d'un document, tel qu'un document de type procuration destinée à autoriser un mandataire à réaliser une action pour le compte d'un mandant, par exemple un pouvoir autorisant un avocat ou un conseil en propriété industrielle à représenter un client devant un office national ou régional de propriété industrielle pour la gestion d'un ou plusieurs droits de propriété industrielle.

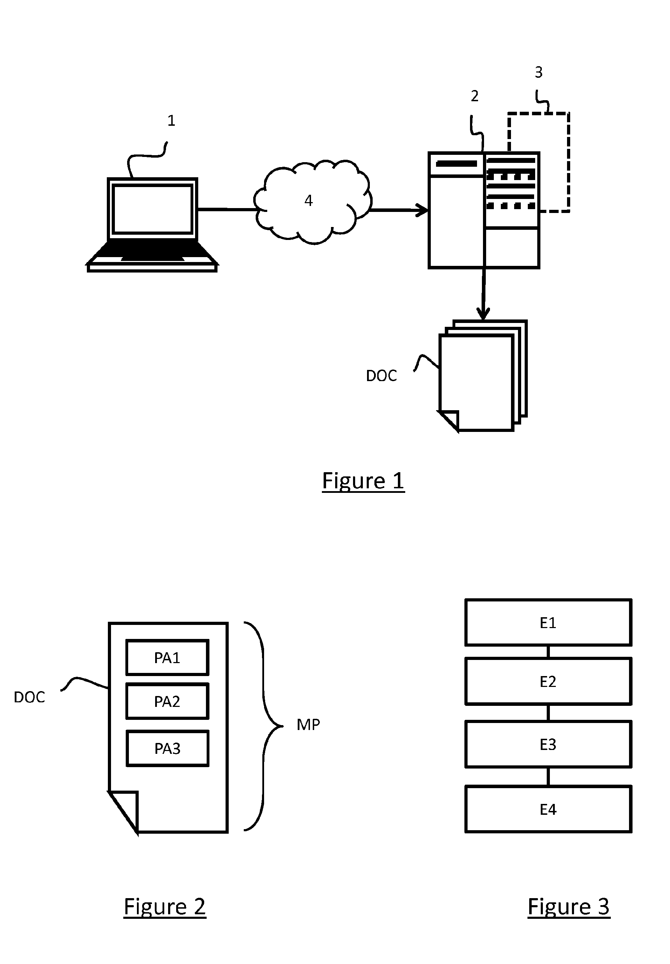

De manière préférée, en référence à la figure 1, le procédé de génération est mis en oeuvre par un système de génération comportant un serveur de données 2 accessible par un terminal utilisateur 1 via un réseau de communication 4, de préférence, via le réseau internet. Le serveur de données 2 comporte une base de données 3 à partir de laquelle peut être générée une pluralité de documents DOC. Le serveur de données 2 comporte en outre un module de génération (non représenté) se présentant sous la forme d'une unité de calcul, par exemple, un processeur.

De manière ordinaire, le terminal utilisateur 1 est un système informatique comportant une unité centrale, un dispositif d'affichage tel qu'un écran, un dispositif de pointage tel qu'une souris et un dispositif d'entrée tel qu'un clavier.

La base de données 3 est stockée dans une unité centrale informatique du serveur de données 2 mais elle pourrait être stockée dans un dispositif de stockage séparé et/ou distant accessible par tout moyen de communication ad hoc. La base de données 3 peut elle-même être stockée sur un seul dispositif de stockage, ou de façon répartie sur plusieurs dispositifs de stockage distincts et/ou distants les uns des autres.

De manière préférée, l'affichage et la récupération du document généré DOC sont réalisés sur le terminal utilisateur 1 via le réseau de communication 4. De préférence, le serveur de données 2 met en oeuvre une interface web au travers de laquelle le terminal utilisateur 1 peut sélectionner des valeurs de paramètres définissant la nature du document à générer. Les documents générés DOC sont téléchargeables depuis cette interface web et peuvent être affichés par cette dernière.

En référence à la figure 2, un document à générer DOC comporte une pluralité de paragraphes PA1, PA2, PA3 qui sont présentés selon au moins une mise en page MP.

On rappelle que par mise en page MP, on entend l'ensemble des caractéristiques d'affichage déterminant la position selon laquelle, et la façon dont sont affichés les contenus des paragraphes dans un document DOC. Il peut donc d'agir, outre des caractéristiques de position, des caractéristiques de police d'affichage, de taille de police d'affichage, de couleur d'affichage, de soulignement, d'encadrement, de présence ou pas d'en-tête(s) et/ou pied(s) de page et/ou de logo(s), etc.

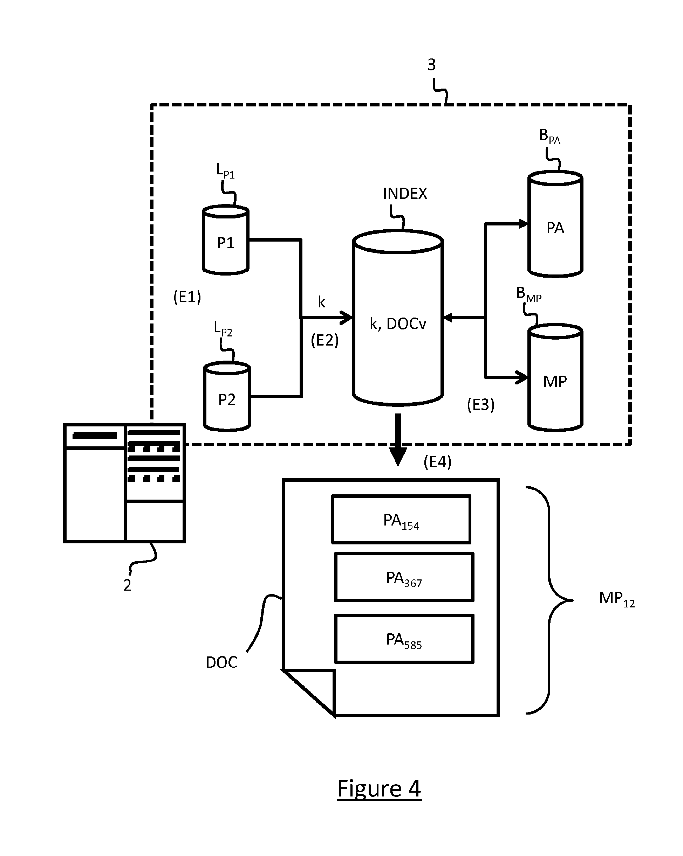

En référence à la figure 4, la base de données 3 comporte une base de paragraphes B_{PA} ainsi qu'une base de mises en page B_{MP} qui sont, de préférence, organisées selon des critères déterminés afin de faciliter leur maintenance et leur mise à jour. Autrement dit, la base de données 3 regroupe les éléments constitutifs de documents à générer DOC.

Selon l'invention, la génération d'un document DOC est fonction d'au moins un premier paramètre P1 et un deuxième paramètre P2. Dans cet exemple, en référence à la figure 4, la base de données 3 comporte une liste de valeurs L_{P1} du premier paramètre P1 et une liste de valeurs L_{P2} du deuxième paramètre P2.

Il va de soi que l'invention s'applique à la génération d'un document DOC à partir de plus de deux paramètres ainsi qu'à la génération d'une pluralité de documents à partir d'une pluralité de paramètres.

Dans cette forme de réalisation de l'invention, chaque combinaison de valeurs du premier paramètre P1 et du deuxième paramètre P2 forme un contexte de génération du document k. Néanmoins, certaines combinaisons de paramètres sont et forment des contextes de génération erronés qui ne sont pas associés à un document virtuel.

A titre d'exemple, si la liste de valeurs du premier paramètre P1 comporte 2 éléments et si la liste de valeurs du deuxième paramètre P2 comporte 3 éléments, le nombre potentiel de combinaisons est égal à 6. Néanmoins, si une combinaison de valeurs n'est pas possible, cette combinaison n'est pas prise en compte et/ou conduit à un message d'erreur qui est affiché sur le terminal 1 illustré à la figure 1. Alternativement ou cumulativement, la sélection de la valeur du deuxième paramètre P2 est conditionnée par la valeur du premier paramètre P1 sélectionné. Autrement dit dans ce cas, le système de l'invention et plus précisément l'interface de sélection de valeurs de paramètres interdit la sélection de valeurs incompatibles entre elles.

Toujours en référence à la figure 4, la base de données 3 comporte un index statique INDEX associant chaque contexte de génération k à un document virtuel DOCv. Chaque document virtuel DOCv est un objet informatique comportant au moins un pointeur PO_{MP} (non représenté) visant une mise en page déterminée MP de la base de mises en page B_{MP} et une pluralité de pointeurs PO_{PA1,} PO_{PA2,} PO_{PA3} (non représentés) visant des paragraphes déterminés PA de la base de paragraphes B_{PA}.

Autrement dit, un document virtuel DOCv pour un contexte de génération k déterminé comporte un lien vers la mise en page MP appropriée audit contexte de génération k et des liens vers les paragraphes PA appropriés audit contexte de génération k. Ainsi, l'index statique INDEX détermine l'organisation logique des éléments constitutifs d'un document (paragraphes et mise en page) pour former un document à générer DOC à partir d'un contexte de génération k.

L'index statique INDEX (et plus précisément son contenu) est prédéterminé ou prédéfini avant la mise en oeuvre du procédé de génération. Chaque document virtuel DOCv comporte l'ensemble des liens pour former le document DOC pour un contexte de génération k déterminé. Ainsi, il suffit de définir de manière précise l'index statique INDEX afin de définir, mettre à jour ou créer un nouveau document à générer DOC. Comme chaque document virtuel DOCv comporte l'ensemble des liens (pointeurs) pour former le document DOC pour un contexte de génération k déterminé, il est également possible, par analyse de l'index INDEX, de savoir quels paragraphes PA et quelles mises en page PM sont utilisés dans quels documents DOC. Autrement dit, l'analyse de l'index INDEX permet de connaître le niveau de mutualisation de chaque paragraphe PA de la base de paragraphes B_{PA} et de chaque mise en page MP de la base de mises en page B_{MP}. A titre d'exemple, grâce à cette analyse, un paragraphe non utilisé de la base de paragraphes B_{PA} peut être supprimé, ou une mise en page MP peu utilisée, dont le niveau de mutualisation est faible, peut être supprimée et remplacée par une mise en page similaire dont le niveau de mutualisation est plus élevé. Une base de paragraphes B_{PA} ou de mises en page B_{MP} comportant un nombre réduit de paragraphes PA et de mises en page MP est plus simple à maintenir et à mettre à jour.

En d'autres termes, les bases de mises en page B_{MP} et de paragraphes B_{PA} forment des réservoirs d'éléments pour les documents à générer DOC, l'index statique INDEX formant les liens logiques pour organiser lesdits éléments au sein d'un document DOC en fonction du contexte de génération k désiré. Ainsi, les réservoirs d'éléments, d'une part, et la logique d'organisation desdits éléments, d'autre part, sont dissociés, ce qui accélère la maintenance de la base de données 3 tout en offrant une grande liberté de conception.

En effet, si un paragraphe (et/ou une mise en page) doit être modifié pour un ensemble de documents DOC, il est uniquement nécessaire de modifier ledit paragraphe dans la base de paragraphes B_{PA}. Cette modification aura un impact sur l'ensemble des documents DOC générés à partir de documents virtuels DOCv pointant sur le paragraphe (et/ou la mise en page) concerné, sans qu'il soit nécessaire de mettre à jour les documents virtuels DOCv, puisque ces derniers pointent déjà sur le paragraphe (et/ou la mise en page) modifié. Ainsi, et de nouveau, aucune modification des documents virtuels DOCv ne doit être mise en oeuvre, étant donné que la logique d'organisation desdits documents DOC n'est pas affectée par la modification d'un paragraphe (et/ou d'une mise en page). En outre, comme les relations entre, d'une part, les paragraphes et les mises en page utilisés et, d'autre part, les documents DOC les utilisant, sont connues (grâce aux documents virtuels DOCv établissant les liens entre eux), il est possible de déterminer aisément si une modification d'un paragraphe PA et/ou d'une mise en page MP sera appropriée pour tous les documents virtuels DOCv pointant vers ledit paragraphe PA et/ou ladite mise en page MP. Ceci facilite la maintenance de la base de données 3.

Au contraire, si l'ordre, la présence ou l'absence de paragraphes PA dans un document DOC pour un contexte de génération déterminé k1 doit être modifié, il est uniquement nécessaire de modifier l'ordre, la présence ou l'absence des pointeurs PO_{PA} du document virtuel DOCv1 associé audit contexte de génération déterminé k1. Aucune modification de la base de paragraphes B_{PA} ne doit être mise en oeuvre étant donné que le contenu des paragraphes desdits documents DOC n'est pas affecté. Il en va bien sûr de même pour les mises en page.

Selon une forme de réalisation, une pluralité de contextes de génération k sont associés à des documents virtuels DOCv identiques (ou même, de préférence, au même document virtuel DOCv), et donc à des pointeurs identiques. A titre d'exemple, un premier contexte de génération k1 relatif aux valeurs de paramètres suivantes « dépôt d'une demande de brevet ; Belgique ; spécifique » et un deuxième contexte de génération k2 relatif aux valeurs de paramètres suivantes « dépôt d'une demande de brevet ; Belgique ; général » sont associés à un même document virtuel DOCv8. Autrement dit, un document généré DOC pour un pouvoir général de demande de brevet en Belgique est identique à un document généré DOC pour un pouvoir spécifique de demande de brevet en Belgique. L'utilisateur a ainsi la possibilité de choisir un pouvoir spécifique ou général alors que les documents générés sont identiques, puisqu'associés à un même document virtuel. Une telle mutualisation de document virtuel permet de limiter le nombre de document virtuels de l'index tout en permettant à l'utilisateur de choisir précisément le document de son choix. De plus, on limite la taille de la base de données 3 et on augmente la mutualisation des paragraphes PA et des mises en page MP, grâce à une mutualisation des documents virtuels DOCv.

En outre, si dans le futur, un pouvoir général de demande de brevet en Belgique devait être différent d'un pouvoir spécifique de demande de brevet en Belgique, il suffirait de créer un nouveau document virtuel DOCv9 pour le deuxième contexte de génération k2 afin d'ajouter un lien vers un paragraphe PAX₉ non présent dans le document virtuel DOCv8. Un tel nouveau document virtuel DOCv9 est simple à obtenir car il suffit de copier le document virtuel DOCv8 et d'ajouter un pointeur PO_{PA} vers le paragraphe manquant PAX₉ de la base de paragraphes B_{PA}.

Cette mutualisation des paragraphes PA et des mises en page MP permet de réduire la quantité d'informations à stocker mais aussi de faciliter la maintenance. Elle facilite par exemple la création de nouveaux documents à générer dont le contenu est proche d'autres documents existants dans la base de données 3. Elle facilite aussi l'application d'une même modification à une série de documents existants dans la base de données 3.

### Mise en oeuvre

D'autres caractéristiques et avantages de l'invention apparaîtront plus clairement à la lecture de la description ci-après des variantes préférées de réalisation et de mise en oeuvre, lesquelles sont données à titre d'exemples non limitatifs et en référence au dessin annexé dans lequel la figure 4 représente schématiquement, entre autres éléments, les principaux éléments d'un exemple de système selon l'invention permettant la mise en oeuvre d'un procédé selon l'invention.

La présente invention est ci-après illustrée à partir d'un exemple de génération de documents consistant en des pouvoirs destinés à permettre à un représentant local d'effectuer une action pour le compte d'un demandeur auprès d'une autorité ou administration locale. Il peut s'agir par exemple, dans le domaine de la propriété industrielle, de pouvoirs pour déposer une demande de brevet ou enregistrer une marque, auprès d'administrations locales compétentes.

Dans l'exemple représenté à la figure 4, le document DOC à générer contient trois paragraphes et une mise en page qui détermine la position des paragraphes en des endroits déterminés, leur affichage avec une certaine police d'affichage, d'une certaine taille, soulignés ou non, en caractères gras ou non.

Dans cet exemple, la mise en page et les paragraphes du document DOC dépendent d'un certain nombre de paramètres, en l'espèce :
- un premier paramètre P1 consistant en la nature de l'action pour laquelle le pouvoir est donné, et
- un deuxième paramètre P2 consistant en l'administration locale auprès de laquelle l'action doit être effectuée.

Ces paramètres P1, P2 peuvent prendre des valeurs regroupées dans des listes de valeurs L_{P1}, L_{P2} stockées dans la base de données 3.

Dans l'exemple, la liste de valeurs L_{P1} du premier paramètre P1 relatif à la nature de l'action comprend différentes valeurs possibles telles que : le dépôt, le retrait, etc.

La liste de valeurs L_{P2} du deuxième paramètre P2 relatif à l'administration locale comprend différentes valeurs possibles telles que : l'Office européen des brevets (OEB), l'Office américain des brevets et des marques, etc.

Dans cet exemple, les différentes valeurs possibles pour le deuxième paramètre P2 peuvent être fonction des valeurs possibles du premier paramètre P1. Autrement dit, la sélection peut être conditionnelle, et plus précisément les valeurs du deuxième paramètre P2 pouvant être sélectionnées sont conditionnées à la valeur choisie pour le premier paramètre P1.

Ainsi, la valeur P2 = « OEB » est une valeur possible du deuxième paramètre P2 lorsque la valeur du premier paramètre P1 est « dépôt d'une demande de brevet », mais n'est pas une valeur possible de ce deuxième paramètre P2 lorsque la valeur du premier paramètre P1 est= « enregistrement d'une marque ». Autrement dit, la combinaison (enregistrement d'une marque ; OEB) n'est pas une combinaison possible de paramètres P1, P2. L'ensemble des combinaisons possibles (ou viables) de valeurs de paramètres forment l'ensemble des contextes de génération k associés à des documents virtuels DOCv et permettant donc la génération de documents DOC.

En référence à la figure 3, les étapes E1-E4 du procédé de génération selon l'invention vont être maintenant présentées en détails.

### Etape de sélection E1

Le procédé comporte une étape de sélection E1 d'une valeur du premier paramètre P1 et d'une valeur du deuxième paramètre P2 de manière à former un contexte de génération k.

Dans cet exemple, le contexte de génération k est formé à partir de la sélection de la valeur pour le premier paramètre P1 = « dépôt d'une demande de brevet » et de la valeur pour le deuxième paramètre P2 = « Belgique ».

La combinaison (P1 ; P2) des valeurs « dépôt d'une demande de brevet; Belgique » forme le contexte de génération k.

### Etape de consultation E2

Le procédé comporte en outre une étape de consultation E2 de l'index statique INDEX pour obtenir le document virtuel DOCv associé audit contexte de génération k, c'est-à-dire, « dépôt d'une demande de brevet ; Belgique ».

Dans cet exemple, le document virtuel DOCv associé audit contexte de génération k comporte quatre pointeurs :
- trois pointeurs de paragraphes PO1_{PA}, PO2_{PA,} PO3_{PA} et
- un pointeur de mise en page PO_{MP}.

Les pointeurs PO1_{PA}, PO2_{PA,} PO3_{PA}, PO_{MP} visent respectivement les paragraphes PA₁₅₄ PA₃₆₇, PA₅₈₅ et la mise en page MP₁₂. De tels pointeurs sont avantageux car ils permettent de déterminer de manière directe et prédéterminée les éléments du document DOC à générer pour le contexte de génération k déterminé. Autrement dit, il n'existe pas d'étape conditionnelle susceptible de ralentir la génération du document DOC.

### Etape de requête E3

Le procédé comporte une étape de requête E3 dans la base de données 3 des éléments visés par les pointeurs PO1_{PA}, PO2_{PA,} PO3_{PA}, PO_{MP} du document virtuel DOCv obtenu pour le contexte de génération déterminé k, c'est-à-dire, les paragraphes PA₁₅₄ PA₃₆₇, PA₅₈₅ et la mise en page MP₁₂.

### Etape de génération E4

Le procédé comporte en outre une étape de génération E4 dudit document DOC dans un format électronique, le document DOC contenant les paragraphes renvoyés par ladite étape de requête E3, agencés selon la mise en page MP₁₂ également renvoyée par l'étape de requête E3.

Grâce à cette mise en oeuvre, la génération d'un document DOC est immédiate du fait de la rapidité de l'étape de requête E3. Cela est particulièrement avantageux lorsque le contexte de génération k est formé à partir d'un grand nombre de valeurs de paramètres, le grand nombre de valeurs n'impactant pas le temps de traitement étant donné que l'index statique est prédéterminé. Le nombre de documents à générer de manière simultanée a ainsi peu d'influence sur la vitesse de génération des documents.

Cela est en outre avantageux pour former plusieurs documents DOC à partir d'une unique étape de sélection E1. Ainsi, on peut sélectionner une unique valeur d'un premier paramètre, par exemple « dépôt d'une demande de brevet », et plusieurs valeurs d'un deuxième paramètre (« Belgique », « Espagne », « Pologne ») pour former de manière rapide trois contextes de génération k et ainsi générer automatiquement trois documents DOC.

### Paragraphe avec champ variable

Dans une variante de mise en oeuvre, au moins un paragraphe PA comporte une partie fixe, désignée « trame fixe », et au moins une partie variable, désignée « champ variable ».

Ainsi, par exemple, seule la trame fixe d'un paragraphe PA est stockée dans la base de données, la valeur du champ variable pouvant être saisie directement par l'utilisateur ou obtenue par requête dans une autre base de données.

L'étape de génération du document comprend alors une étape de saisie dans un formulaire de saisie, ou une étape de récupération dans une autre base de données, d'une valeur du champ variable, et une étape d'insertion de cette valeur dans le paragraphe PA avec la trame fixe du paragraphe.

A titre d'exemple, le paragraphe comporte une trame fixe indiquant les actions à réaliser sur un droit de brevet européen dont le numéro de dépôt n'est pas complété. Autrement dit, le numéro de dépôt constitue un champ variable.

Lors de l'étape de génération du document, la trame fixe du paragraphe pointé est complétée par le numéro de dépôt saisi directement par l'utilisateur ou récupéré dans une autre base de données. Dans cette dernière hypothèse, et par exemple, le numéro de dépôt peut être récupéré dans une autre base de données comportant la liste des droits de brevet de l'utilisateur.

Dans cette mise en oeuvre, il a été présenté un paragraphe PA comportant un unique champ variable. Il va de soi qu'un paragraphe PA pourrait en comporter plusieurs, par exemple, un numéro de dépôt, une date de dépôt, le nom d'un agent, etc.

Selon une forme de réalisation particulière, la valeur d'un champ variable est choisie parmi une série de valeurs possibles présentées à l'utilisateur, par exemple sous forme d'une liste déroulante de valeurs dans laquelle l'utilisateur peut choisir une ou plusieurs valeurs pour le champ variable.

Selon une forme de réalisation particulière, le procédé comprend une étape de génération d'un formulaire de saisie qui est fonction du contexte de génération. Ceci offre une grande flexibilité au procédé qui permet, selon le contexte de génération, de proposer ou pas à l'utilisateur un formulaire dépendant de ce contexte.

Par exemple, pour générer un pouvoir pour céder une demande de brevet, un utilisateur sélectionne les valeurs des paramètres afin de déterminer le contexte de génération d'une cession d'un droit de brevet. Le document virtuel associé au contexte de génération déterminé comporte des pointeurs qui visent des paragraphes PA comportant des champs variables. Aussi, le système de génération génère l'affichage d'un formulaire de saisie qui comprend les champs variables à compléter pour l'ensemble des paragraphes pointés PA ; ces champs variables peuvent par exemple permettre d'introduire des informations sur la cession visée par le pouvoir.

Il suffit à l'utilisateur de compléter l'ensemble des champs variables afin de permettre la génération du pouvoir désiré. Un tel procédé permet de personnaliser un paragraphe en fonction du contexte de génération, ce qui est avantageux et améliore la qualité et la précision des documents générés. Un tel procédé est particulièrement avantageux pour générer de manière simultanée un grand nombre de documents dans lesquels est inséré un même champ variable.

Le procédé de génération d'un document ayant été présenté, l'invention concerne également un système de génération pour la mise en oeuvre dudit procédé.

L'invention se rapporte, selon un deuxième aspect, à un système de génération automatique d'au moins un document, en particulier un serveur de données 2, comportant une base données 3 telle que présentée précédemment et un module de génération apte à :
- consulter l'index statique INDEX afin d'obtenir le document virtuel DOCv à partir d'un contexte de génération préalablement déterminé k ;
- effectuer une requête dans la base de données 3 de la mise en page MP et des paragraphes pointés PA par le document virtuel obtenu DOCv ;
- générer un document DOC dans un format électronique, contenant les paragraphes renvoyés PA par ladite requête et la mise en page MP renvoyée par ladite requête.

De manière avantageuse, le système de génération bénéficie des mêmes avantages que ceux liés au procédé de génération précédemment présenté.

De manière avantageuse, grâce au système selon l'invention, le contenu et les valeurs en tant que tels des éléments du document à générer (mises en page, paragraphes) sont dissociés de la logique d'association desdits éléments (document virtuel). Une telle dissociation permet d'offrir une grande flexibilité pour générer des documents grâce au module de génération.

En outre, la mise en oeuvre d'une requête par le module de génération est rapide étant donné que chaque contexte de génération est associé à un document virtuel qui comporte la définition de l'ensemble des éléments du document (mise en page et paragraphes). Autrement dit, grâce à l'index statique, on détermine de manière directe le contenu d'un document à générer à partir du contexte de génération. Un tel système de génération limite la durée d'attente d'un utilisateur qui obtient le document désiré de manière instantanée, puisque le temps de traitement du système est ainsi minimisé.

Un tel système est particulièrement avantageux pour générer un grand nombre de documents de manière simultanée, en particulier, des pouvoirs pour une pluralité de juridictions.

Egalement, l'invention ne se limite pas à une architecture informatique déterminée, telle que celle représentée à la figure 4. Tant la base de données 3 que le module de génération peuvent être implémentés de façon répartie ou non, sur une seule et même unité ou non. En outre, la génération du document DOC peut tout aussi bien prendre place dans le serveur 2 sur lequel est implémenté le module de génération ou au niveau d'une unité distante reliée au serveur 2 par l'intermédiaire d'un réseau de communication, ou les deux.

L'ensemble de la description ci-dessus est donné à titre d'exemple et n'est pas limitatif de l'invention.

En particulier, l'invention ne se limite pas à la génération de pouvoirs, à fortiori à la génération de pouvoirs dans le domaine de la propriété industrielle.

Par ailleurs, des informations autres que le contenu des paragraphes et leur mise en page pourraient être déterminées par le ou les paramètres. On peut par exemple penser à l'existence ou non d'un pouvoir, au papier à utiliser pour son impression, etc.

## Revendications

1. Procédé de génération automatique d'au moins un document (DOC), notamment de type procuration destinée à autoriser un mandataire à réaliser une action pour le compte d'un mandant, le document (DOC) contenant une pluralité de paragraphes (PA) affichée selon une mise en page (MP), ladite pluralité de paragraphes (PA) et ladite mise en page (MP) étant fonction d'au moins un premier paramètre (P1) et un deuxième paramètre (P2), le procédé mettant en oeuvre une base de données (3) comportant au moins :
- une base (B_{MP}) de mises en page (MP);
- une base (B_{PA}) de paragraphes (PA) ;
- une liste de valeurs (L_{P1}) dudit premier paramètre (P1) ;
- une liste de valeurs (L_{P2}) dudit deuxième paramètre (P2), chaque combinaison de valeurs desdits paramètres (P1, P2) formant un contexte de génération (k) ;
- un index statique (INDEX) associant chaque contexte de génération (k) à un document virtuel (DOCv), un document virtuel (DOCv) comportant au moins un pointeur (PO_{MP}) visant une mise en page (MP) déterminée de la base de mises en page (B_{MP}) et une pluralité de pointeurs (PO_{PA}) visant des paragraphes déterminés (PA) de la base de paragraphes (B_{PA}) ;
procédé **caractérisé en ce qu'il** comprend :
- une étape de sélection (E1) de valeurs du premier paramètre (P1) et du deuxième paramètre (P2) de manière à former un contexte de génération (k) ;
- une étape de consultation (E2) de l'index statique (INDEX) afin d'obtenir le document virtuel (DOCv) associé audit contexte de génération (k) ;
- une étape de requête (E3) dans la base de données (3) de la mise en page (MP) et des paragraphes (PA) pointés par le document virtuel obtenu (DOCv) ; et
- une étape de génération (E4) dudit document (DOC) dans un format électronique, contenant les paragraphes (PA) renvoyés par ladite requête et la mise en page (MP) renvoyée par ladite requête.

2. Procédé selon la revendication 1, le document (DOC) comprenant au moins un paragraphe (PA) comportant une trame fixe et au moins un champ variable.

3. Procédé selon la revendication 2, dans lequel, le procédé comprend une étape de saisie dans un formulaire de saisie, ou une étape de récupération dans une autre base de données, de la valeur du champ variable dudit paragraphe (PA).

4. Procédé selon la revendication 3, comprenant une étape de génération d'un formulaire de saisie en fonction du contexte de génération (k).

5. Procédé selon l'une des revendications 1 à 4, dans lequel l'étape de sélection (E1) d'au moins un paramètre (P2) est faite de manière conditionnelle en fonction de la valeur d'au moins un autre paramètre (P1).

6. Procédé selon l'une des revendications 1 à 5, dans lequel plusieurs valeurs d'un même paramètre (P1, P2) sont sélectionnées au cours de l'étape de sélection (E1) de manière à former plusieurs contextes de génération (k) et ainsi générer plusieurs documents (DOC).

7. Procédé selon l'une des revendications 1 à 6, dans lequel l'index statique (INDEX) comporte un même document virtuel (DOCv) associé à plusieurs contextes de génération (k) différents.

8. Système de génération automatique d'au moins un document (DOC), notamment de type procuration destinée à autoriser un mandataire à réaliser une action pour le compte d'un mandant, le document (DOC) contenant une pluralité de paragraphes (PA) affichée selon une mise en page (MP), ladite pluralité de paragraphes (PA) et ladite mise en page (MP) étant fonction d'au moins un premier paramètre (P1) et un deuxième paramètre (P2), le système de génération comportant :
- une base de données (3) comportant au moins :
■ une base (B_{MP}) de mises en page (MP);
■ une base (B_{PA}) de paragraphes (PA) ;
■ une liste de valeurs (L_{P1}) dudit premier paramètre (P1) ;
■ liste de valeurs (L_{P2}) dudit deuxième paramètre (P2), chaque combinaison de valeurs desdits paramètres (P1, P2) formant un contexte de génération (k) ;
■ un index statique (INDEX) associant chaque contexte de génération (k) à un document virtuel (DOCv), un document virtuel (DOCv) comportant au moins un pointeur (PO_{MP}) visant une mise en page (MP) déterminée de la base de mises en page (B_{MP}) et une pluralité de pointeurs (PO_{PA}) visant des paragraphes déterminés (PA) de la base de paragraphes (B_{PA}) ; et
- un module de génération apte à :
■ consulter (E2) l'index statique (INDEX) afin d'obtenir le document virtuel (DOCv) associé à un contexte de génération (k) préalablement déterminé ;
■ effectuer une requête (E3) dans la base de données (3) de la mise en page (MP) et des paragraphes (PA) pointés par le document virtuel obtenu (DOCv) ;
■ générer (E4) un document (DOC) dans un format électronique, contenant les paragraphes (PA) renvoyés par ladite requête et la mise en page (MP) renvoyée par ladite requête.

9. Système selon la revendication 8, au moins un paragraphe (PA) comportant une trame fixe et au moins un champ variable, le module de génération est apte à récupérer la valeur du champ variable dudit paragraphe (PA) dans un formulaire de saisie ou dans une autre base de données et à associer cette valeur avec la trame fixe dudit paragraphe (PA).

10. Système selon la revendication 9 comprenant des moyens aptes à générer un formulaire de saisie en fonction du contexte de génération (k).
